# EUROPÄISCHE PATENTSCHRIFT

(11) **EP 0 555 542 B1**
(45) Veröffentlichungstag und Bekanntmachung des Hinweises auf die Patenterteilung: **18.10.1995**
(21) Anmeldenummer: 92121122.3
(22) Anmeldetag: 11.12.1992
(51) Int. Cl.: F16B 13/14

(54) **Anker zur Verankerung mittels einer Verbundmasse in einem Bohrloch eines Betonteiles**
Anchor to be anchored by means of a compound mass in a predrilled hole of a concrete part
Ancre pour l'ancrage au moyen d'une masse de liaison dans le trou prépercé d'une pièce en béton

(30) Priorität: 13.02.1992 DE 4204214
(43) Veröffentlichungstag der Anmeldung: 18.08.1993
(73) Patentinhaber: fischerwerke Artur Fischer GmbH & Co. KG, D-72178 Waldachtal (DE)
(72) Erfinder: Fischer, Artur, Prof. Dr. h. c., D-72178 Waldachtal (DE)

(56) Entgegenhaltungen:
- EP-A- 0 251 887
- EP-A- 0 352 226
- US-A- 4 516 883

## Beschreibung

Die Erfindung betrifft einen Anker zur Verankerung mittels einer Verbundmasse in einem Bohrloch eines Betonteiles gemäß Oberbegriff des Anspruches 1.

Aus der US-PS 4 516 883 ist ein Anker mit einem Gewindebolzen bekannt, der an seinem dem Bohrlochgrund zugewandten Ende einen Spreizkonus hat, der von einer mittels des Spreizkonus aufspreizbaren Hülse umschlossen ist. Die Verankerung des bekannten Ankers in einem zylindrischen Bohrloch erfolgt zum einen mittels einer aushärtbaren Verbundmasse und zum anderen durch Einziehen des Spreizkonusses in die aufspreizbare Hülse. Die auf der Spreizung beruhende mechanische Verankerung dient lediglich dem Zweck, bis zur vollständigen Aushärtung der Verbundmasse eine Vorbefestigung zu erreichen. Nach dem Aushärten ist der gesamte Verankerungsbereich des Ankers derart in die Verbundmasse eingebunden, daß keine Axialverschiebung zwischen dem Spreizkonus und der Spreizhülse stattfinden kann. Tritt nunmehr durch Rißbildung eine Bohrlocherweiterung ein, kommt es zu einer Ablösung der Verbundmasse von der Bohrlochwandung, die zu einer erheblichen Verminderung der Haltekraft führt.

Um eine Eignung eines Verbundankers auch in der Zugzone, in der Rißbildungen auftreten, zu erreichen, wurde in der DE-A1-35 16 866 als Anker eine Gewindestange mit einer konischen Erweiterung an ihrem vorderen Ende vorgeschlagen, die in einem eine Hinterschneidung aufweisenden Bohrloch mittels einer Verbundmasse verankert wird. Zur Verankerung wird in das Bohrloch eine Glasampulle eingeschoben, die eine Verbundmasse aus Polyesterharz, einem Härter und Zuschlagstoffen enthält. Beim Eintreiben des Ankers in das Bohrloch wird die Glasampulle zerstört und die Komponenten der Verbundmasse durch Vermengen aktiviert. Nach dem Aushärten der Verbundmasse ist der Anker fest im Bohrloch eingebunden und verankert, wobei die konische Erweiterung des Ankers im Bereich der Hinterschneidung des Bohrloches positioniert ist. Tritt nunmehr ein durch die Verankerungsstelle verlaufender Riß auf, ergibt sich zwar durch die Ablösung der Verbundmasse an der Bohrlochwandung eine Verminderung der Haltekraft, die jedoch durch den Formschluß im Bereich der Hinterschneidung geringer ist als bei einem nur in einem zylindrischen Bohrloch gesetzten Verbundanker.

Aus der EP-A-251 887 ist ein in einem zylindrischen Bohrloch zu setzender Anker bekannt, dessen vorderer Bereich eine konische Erweiterung mit einem sich daran anschließenden zylindrischen Abschnitt aufweist. Über diesen Bereich und einem Teilstück des Ankers ist ein Kunststoffmantel aufgebracht, dessen Außenfläche mit umlaufenden Nuten versehen ist. Durch den Kunststoffmantel ergibt sich eine Verdickung des vorderen Teils des Ankers, die in der ausgehärteten Verbundmasse eben günstigeren Formschluß bildet. Da jedoch eine axiale Verschiebung zwischen dem Ankerbolzen und dem Kunststoffmantel nicht eintreten kann, ergibt sich bei einer Bohrlocherweiterung durch Rißbildung ebenfalls eine Ablösung der Verbundmasse von der Bohrlochwandung, die zu einer Reduzierung des Haltewertes führt.

Der Erfindung liegt die Aufgabe zugrunde, einen Anker zur Verankerung mittels einer Verbundmasse in einem Bohrloch eines Betonteils zu schaffen, der bei einer Befestigung in einem geraden Bohrloch eines Betonteils in der Zugzone hohe Sicherheitsreserven besitzt.

Die Lösung dieser Aufgabe wird durch die in Anspruch 1 angegebenen Merkmale erhalten. Der Anker besteht aus einem Gewindebolzen mit einem Spreizkonus, der von einer aufspreizbaren Hülse umschlossen ist. Um ein sicheres Nachspreizverhalten auch bei geringen Haltekräften - wie diese bei Auftreten eines Risses vorliegen - zu erhalten, ist im Bereich der geschlitzten Spreizhülse der Gewindebolzen kunststoffummantelt. Im Bereich der geschlitzten Spreizhülse befindet sich der Spreizkonus und ein sich daran anschließender gerader Schaftabschnitt des Gewindebolzens sowie die Stirnfläche des Spreizkonus. Die Kunststoffummantelung stellt sicher, daß die Verbundmasse keine unlösbaren Verklebungen zwischen Hülse und Gewindebolzen hervorruft. Solche unlösbaren Verklebungen hätten nämlich zur Folge, daß sich der Spreizkonus nicht mehr in die Hülse zum Nachspreizen einziehen läßt.

Besonders vorteilhaft ist es, stirnseitig eine Stahlkappe oder dergleichen reibschlüssig mit dem Gewindebolzen zu verbinden, und zwar so daß diese Verbindung durch eine axiale Relativbewegung zwischen Stahlkappe und Gewindebolzen gelöst werden kann. Dies hat den Vorteil, daß die in dem Bohrloch mittels Verbundmasse verklebte Stahlkappe eine Axialbewegung des Gewindebolzens beim Nachspreizvorgang nicht behindert.

Als lösbare Verbindung kann ein an der Stahlkappe abstehender Verbindungsstift vorgesehen sein, der durch ein Loch in der Kunststoffummantelung greift, wobei diese eng am Verbindungsstift anliegt. Die Kunststoffummantelung kann als einstückiger Kunststoffüberzug oder aus einer Kunststoffhülse und einer stirnseitig aufliegenden Kunststoffscheibe bestehen. Ein umgebördelter Rand der Hülse kann dabei die Kunststoffscheibe in deren Randbereich übergreifen und an der Stirnseite des Spreizkonus festhalten.

Die Hülse erstreckt sich über eine möglichst große Länge des Schafts des Gewindebolzens, um über die gesamte Bohrlochtiefe eine Verbindung zwischen Bohrlochwand und Hülse zu ermöglichen. Die Mantelfläche der Hülse ist mit einem Gewinde oder einer anderen Struktur versehen, um die Klebeverbindung zwischen Bohrlochwand und Hülse dadurch zu verstärken.

Die Erfindung wird anhand eines in der Zeichnung dargestellten Ausführungsbeispiels näher erläutert.

Es zeigen:
Figur 1 einen Anker teilweise im Längsschnitt,
Figur 2 die Hülse des Ankers gemäß Figur 1,
Figur 3 die zweiteilige Kunststoffummantelung, bestehend aus Kunststoffhülse und Kunststoffscheibe, des Ankers gemäß Figur 1 und
Figur 4 die Draufsicht auf die stirnseitige Stahlkappe des Ankers gemäß Figur 1.

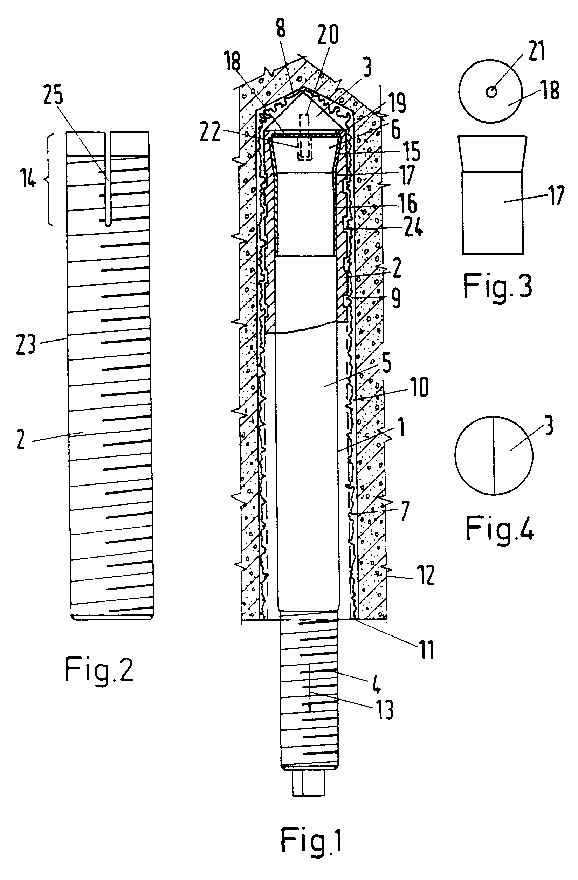

Der in Figur 1 dargestellte Anker besteht aus einer Gewindestange 1, einer Hülse 2 und einer stirnseitigen Stahlkappe 3. Der Gewindebolzen 1 besitzt einen Gewindeabschnitt 4, auf den eine Schraubenmutter zur Befestigung eines Gegenstandes an der Oberfläche eines Betonteils aufgeschraubt werden kann. An den Gewindeabschnitt 4 schließt sich ein gerader Schaftteil 5 an, der in einen Spreizkonus 6 übergeht. Der Spreizkonus 6 befindet sich an dem Ende des Ankers, welches beim Einsetzen in ein Bohrloch 7 dem-Bohrlochgrund 8 zugewandt ist. Die Stahlkappe 3 dient beim Einsetzen in das Bohrloch zur Zertrümmerung der zuvor in das Bohrloch eingesetzten Glasampulle mit Verbundmasse 9, die beim Einsetzvorgang verdrängt wird, so daß diese sich an der gesamten Bohrlochwandung 10 bis hin zur Bohrlochöffnung 11 verteilt. Das Bohrloch 7 ist als gerades Bohrloch in einem Betonteil 12 ausgebildet. Tritt ein Riß im Bereich des Bohrloches auf, so reichen die Haltekräfte zwischen Hülse 2 und Bohrlochwandung 10 aus, um diese im Bohrloch für einen Nachspreizvorgang ausreichend zu fixieren. Das Nachspreizen erfolgt dabei in der Weise, daß eine sehr geringfügige axiale Bewegung des Gewindebolzens 1 in Pfeilrichtung 13 die Hülse 2 in deren Spreizbereich 14 geringfügig aufweitet. Eine axiale Verschiebung des Spreizkonus 6 drückt die konischen Innenflächen 15 im Spreizbereich 14 nach außen wodurch die Haltekräfte zwischen Hülse 2 und der Bohrlochwandung 10 erhöht werden.

Damit eine gute Gleitfähigkeit zwischen Gewindebolzen 1 und der Innenfläche der Hülse 2 im Spreizbereich 14 gewährleistet ist, besitzt der Gewindebolzen 1 eine Kunststoffummantelung 16, die aus einer Kunststoffhülse 17 und einer stirnseitig am Spreizkonus 6 angebrachten Kunststoffscheibe 18 besteht. Die Kunststoffscheibe 18 wird von einem umgebördelten Rand 19 der Hülse 2 gehalten.

Die keilförmig zulaufende Stahlkappe 3 deckt die Kunststoffscheibe 18 ab und ist mittels eines Verbindungsstifts 20 reibschlüssig mit der Kunststoffscheibe 18 verbunden. Der Verbindungsstift 20 steht axial an der Stahlkappe 3 nach unten ab und ist mit dieser fest verbunden. Er greift durch ein Loch 21 (Figur 3) der Kunststoffscheibe 18 hindurch in ein axial angeordnetes Sackloch 22 des Gewindebolzens 1. Der Durchmesser des Sackloches 22 ist größer als der des Verbindungstifts 20, während der Durchmesser des Loches 21 einen geringeren Durchmesser aufweist als der Verbindungsstift 20. Dadurch wird erreicht, daß der Verbindungsstift 20 reibschlüssig in der Kunststoffscheibe 18 gehalten wird und somit die im Bohrloch 7 mittels Verbundmasse verklebte Stahlkappe 3 eine axiale Bewegung des Gewindebolzens 1 in Pfeilrichtung 13 nicht verhindert.

Die in Figur 2 dargestellte Hülse 2 ist mit einem Außengewinde 23 versehen. In Figur 1 ist die Hülse 2 in anderer Weise an ihrer Umfangsfläche strukturiert, wobei es sich dort um eine wendelförmige Strukturierung 24 handelt.

In Figur 3 ist die Seitenansicht der Kunststoffhülse 17 und die Draufsicht auf die Kunststoffscheibe 18 dargestellt. Beide Teile zusammen bilden die Kunststoffummantelung in dem Bereich des Gewindebolzens 1, der dem geschlitzten Spreizbereich 14 der Hülse 2 entspricht. Wesentlich ist dabei, daß die Kunststoffummantelung über die gesamte Länge der Längsschlitze 25 verläuft, damit auch im Bereich der Längsschlitze 25 keine Verbundmasse 9 mit der metallischen Oberfläche des Gewindestabes 1 in Berührung kommt. Dadurch wird ein Verkleben der metallischen Hülse 2 mit dem metallischen Gewindebolzen 1 sicher verhindert.

Die Stahlkappe 3 ist in Figur 4 in der Draufsicht dargestellt. Die Stahlkappe 3 bildet einen Keil mit kreisförmiger Grundfläche.

## Patentansprüche

1. Anker zur Verankerung mittels einer Verbundmasse in einem Bohrloch eines Betonteils oder dergleichen mit einem Gewindebolzen, der an seinem dem Bohrlochgrund zugewandten Ende einen zum Ende sich erweiternden Spreizkonus hat, der von einer mittels des Spreizkonus aufspreizbaren Hülse umschlossen ist, **dadurch gekennzeichnet,** daß der Spreizkonus (6) an seiner Mantelfläche und an seiner Stirnfläche eine Kunststoffummantelung (16) hat.

2. Anker nach Anspruch 1, **dadurch gekennzeichnet**, daß die Kunststoffummantelung (16) auch einen Teilbereich des an den Spreizkonus (6) angrenzenden geraden Schaftteils (5) des Gewindebolzens (1) umhüllt.

3. Anker nach einem der Ansprüche 1 oder 2, **dadurch gekennzeichnet**, daß stirnseitig eine Stahlkappe (3) reibschlüssig mit dem Gewindebolzen (1) verbunden und axial abnehmbar ist.

4. Anker nach Anspruch 3, **dadurch gekennzeichnet**, daß an der Stahlkappe (3) ein Verbindungsstift (20) axial absteht, der durch ein Loch (21) in der Kunststoffummantelung (16) greift, wobei das Loch (21) bei nicht hindurchgreifendem Verbindungsstift (20) einen kleineren Durchmesser hat als der Durchmesser des Verbindungsstifts (20).

5. Anker nach einem der Ansprüche 3 oder 4, **dadurch gekennzeichnet**, daß die Stahlkappe (3) keilförmig zum Bohrlochgrund (8) verläuft.

6. Anker nach einem der vorhergehenden Ansprüche, **dadurch gekennzeichnet**, daß die Kunststoffummantelung (16) aus einer die Mantelfläche des Gewindebolzens (1) umgreifenden Kunststoffhülse (17) und einer stirnseitig aufliegenden Kunststoffscheibe (18) besteht.

7. Anker nach Anspruch 6, **dadurch gekennzeichnet**, daß ein umgebördelter Rand (19) der Hülse (2) die Kunststoffscheibe (18) in deren Randbereich übergreift.

8. Anker nach einem der vorhergehenden Ansprüche, **dadurch gekennzeichnet**, daß die Hülse (2) den Gewindebolzen (1) bis zu seinem Gewindeabschnitt (4), der an dem dem Spreizkonus (6) abgewandten Ende ausgebildet ist, umhüllt und im Spreizbereich (14) Längsschlitze (25) hat, und daß die Mantelfläche der Hülse (2) wie ein Gewinde (23), wendelförmig oder in anderer Weise strukturiert ist.

## Claims

1. Anchor for anchoring by means of a compound mass in a drilled hole of a concrete part or the like with a threaded bolt, which at its end facing the bottom of the drilled hole has an expander cone that widens towards its end, the expander cone being enclosed by a sleeve that is arranged to be expanded by means of the expander cone, characterized in that on its outer surface and on its end face the expander cone (6) has a plastics covering (16).

2. An anchor according to claim 1, characterized in that the plastics covering (16) also covers a partial region of the straight shank part (5) of the threaded bolt (1) adjoining the expander cone (6).

3. An anchor according to one of claims 1 and 2, characterized in that at the front end a steel cap (3) is in frictional connection with the threaded bolt (1) and is axially removable.

4. An anchor according to claim 3, characterized in that a connecting pin (20), which engages through a hole (21) in the plastics covering (16), projects axially from the steel cap (3), the hole (21), when it is not engaged by the connecting pin (20), having a smaller diameter than the diameter of the connecting pin (20).

5. An anchor according to one of claims 3 and 4, characterized in that the steel cap (3) extends in the manner of a wedge towards the bottom of the drilled hole (8).

6. An anchor according to one of the preceding claims, characterized in that the plastics covering (16) consists of a plastics sleeve (17) surrounding the outer surface of the threaded bolt (1) and a plastics disc (18) lying on the end face thereof.

7. An anchor according to claim 6, characterized in that a flanged-over edge (19) of the sleeve (2) engages over the plastics disc (18) in the edge region thereof.

8. An anchor according to one of the preceding claims, characterized in that the sleeve (2) covers the threaded bolt (1) as far as its threaded portion (4) that is formed at the end remote from the expander cone (6), and in the expansion zone (14) has elongate slots (25), and the outer surface of the sleeve (2) is configured like a thread (23), helically, or in another manner.

## Revendications

1. Ancre destinée à être ancrée au moyen d'une masse composite de liaison dans un trou percé dans une pièce de béton, ou dans une pièce similaire, au moyen d'un boulon fileté qui comporte, à son extrémité orientée vers le fond du trou percé, un cône d'expansion, s élargissant jusqu'à l'extrémité, qui est entouré d'une douille expansible au moyen du cône d'expansion, caractérisée en ce que le cône d'expansion (6) comporte une enveloppe (16) en matière plastique sur sa surface extérieure et sur sa surface frontale.

2. Ancre selon la revendication 1, caractérisée en ce que l'enveloppe (16) en matière plastique entoure également une zone partielle de la partie (5) formant une tige droite, proche du cône d'expansion (6) du boulon fileté (1).

3. Ancre selon l'une des revendications 1 ou 2, caractérisée en ce que du côté avant, une coiffe d'acier (3) est reliée avec blocage par frottement au boulon fileté (1) et est amovible axialement.

4. Ancre selon la revendication 3, caractérisée en ce qu'une tige de liaison (20) fait saillie axialement hors de la coiffe d'acier, laquelle tige de liaison pénètre par un trou (21) dans l'enveloppe (16) en matière plastique, le trou (21) ayant, alors que la tige de liaison (20) ne le traverse pas, un diamètre inférieur à celui de la tige de liaison (20).

5. Ancre selon l'une des revendications 3 ou 4, caractérisée en ce que la coiffe d'acier (3) s'étend coniquement jusqu'au fond du trou percé (8).

6. Ancre selon l'un des revendications précédentes, caractérisée en ce que l'enveloppe (16) en matière plastique est constituée d'un manchon (17) en matière plastique entourant la surface extérieure du boulon fileté (1) et d'une rondelle (18) en matière plastique appliquée sur le côté frontal.

7. Ancre selon la revendication 6, caractérisée en ce qu'un bord (19), formant un collet, de la douille (2) recouvre la rondelle (18) en matière plastique dans la zone du bord de celle-ci.

8. Ancre selon l'une des revendications précédentes, caractérisée en ce que la douille (2) du boulon fileté (1) enveloppe (le boulon fileté (1))jusqu'à son tronçon fileté (4) qui est réalisé à son extrémité située à l'opposé du cône d'expansion (6), et en ce qu'elle comporte une fente longitudinale (25) dans la zone d'expansion (14), et en ce que la surface extérieure de la douille (2) comporte une structure en relief telle qu'un filetage (23), une hélice ou une structure en relief d'un autre genre.
